# EUROPEAN PATENT APPLICATION

(11) **EP 2 042 241 A1**
(43) Date of publication of application: **01.04.2009**
(21) Application number: 07117574.9
(22) Date of filing: 28.09.2007
(51) Int. Cl.: B04C 9/00, B01D 50/00

(54) **Separator device**

(71) Applicant: HTC SWEDEN AB, 614 22 Söderköping (SE)
(72) Inventor: Sunesson, Johan, 582 27 Linköping (SE)
(74) Representative: Bokinge, Ole

(57) **Abstract**

A separator device 1 for separating particles contained in an air stream is disclosed, comprising a cyclone separator 2 and a filter 3, said cyclone separator 2 comprising a casing 20 having a substantially conical portion 4, wherein the casing 20 is at least partially surrounded by the filter 3.

## Description

### Technical field

The present document relates to a device for separating particles contained in an air stream, such as for example residual material generated during abrasive processes. In particular, the present document is concerned with a device for separating particles, e.g. as is described in WO2005/118111A1.

### Background

During abrasive processes, such as for example grinding and/or polishing of hard floor surfaces, considerable amounts of residual particles are generated. For process efficiency as well as for health reasons, these particles need to be efficiently removed.

An arrangement for the collection of abrasive material is known from WO2005/118111A1, which discloses a device for collecting particles, wherein a particle containing airflow is passed through several separation units in the form of, in turn, a cyclone separator, a coarse filter, and a micro filter unit.

The separation units are arranged in a common casing, and the air stream is passed through the device by means of a vacuum arrangement wherein the suction side of a fan brings particle-filled air through an inlet at the top of the cyclone separator.

The function of such separator devices is well known in the art; when the air stream circulates down inside the cone shaped side wall of the cyclone, particles are deposited along the way. The air flow then raises upwards again along the axis of the cyclone, whereafter, to further reduce the number of particles, it is passed through a coarse filter arranged above the cyclone separator. Finally, the air flow is passed through a micro filter arranged to collect smaller particles still present in the air stream.

While efficiently removing particles from an air stream, however, separator devices such as that described above tend to be rather space-demanding. The use of several separation units may be necessary to achieve a satisfactory separation of the particles contained in the air stream, but requires rather a lot of space, thus resulting in a bulky casing.

Also, a large filter surface is needed to efficiently remove particles, which further increases the requisite size of the separator device.

### Summary

In view of the above, an objective of the present document is to solve or at least reduce the problems discussed above. In particular, an objective is to provide an improved device for separating particles contained in an air stream, which provides a compact solution while still allowing a large filter surface.

According to a first aspect of the present solution, there is provided a separator device for separating particles contained in an air stream, comprising a cyclone separator and a filter, said cyclone separator comprising a casing having a substantially conical portion, wherein the casing is at least partially surrounded by the filter, circumferentially and/or axially.

By "partially surrounded by" is meant that the filter is arranged around at least part of the outside of the casing.

Arrangement of the filter package around the cyclone separator provides a compact solution, thus allowing a large filter area and efficient collection of particles.

The conical portion may be at least partially, possibly entirely, surrounded by the filter.

The conical portion constitutes a substantial part of the length of the cyclone, and arranging the filter around the conical portion of the cyclone thus makes efficient use of the space and provides a compact solution.

Substantially the entire casing may be surrounded by the filter.

Such a solution allows a large filter area, adding to good separation properties.

The filter may be substantially tube-shaped.

This may be an efficient way of using the space outside the cyclone casing, and correspondingly providing a tubular air passage way between the side wall of the cyclone separator and the filter.

The filter may be a coarse filter.

The filter and the cyclone separator may be arranged in a common housing.

The filter may be arranged between the housing and the casing.

The device may be so arranged that particles collected by the cyclone separator and particles collected by the filter are deposited in a common collecting bag.

The device may further comprise a first web arranged between the filter and the housing for positioning of the first web relative to the housing.

By "web" is understtod any suitable web known in the art, such as for example a grid, net or wire net.

This prevents the filter from being pressed outwards by the vacuum and blocking the passageway for air that has passed through the filter.

A second web may be arranged to press out part of the filter relative to the first web.

This provides a larger filter area and thus improves separation.

The first and second webs may be integrated.

At least one flange may be provided at an upper and/or lower inner portion of the housing, for spacing the filter from a wall of the housing. Thus, the filter may be mounted in a tensioned manner over said flange, such as to keep it spaced from the housing wall.

### Brief description of the drawings

The above, as well as additional objects, features and advantages of the present solution, will be better understood through the following illustrative and non-limiting detailed description of embodiments of the present solution, with reference to the appended drawing, wherein:

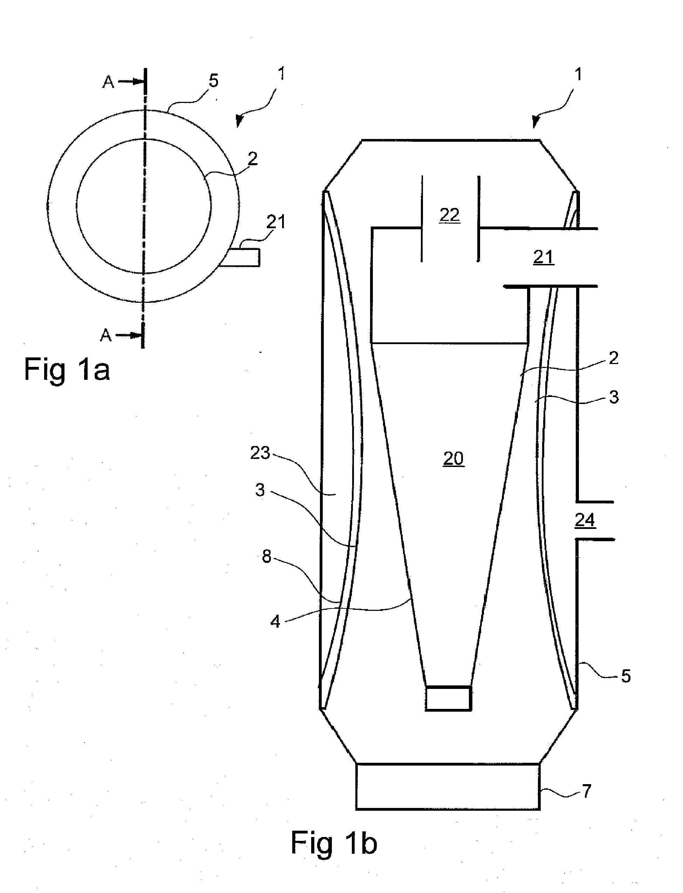

Fig. 1 a is a schematic sectional side view a separator device according to the present solution;
Fig. 1 b is a schematic sectional view along line A-A of Fig. 1 a.
Fig. 3 shows the same view as Figs 1 a-1 b with arrows indicating the flow of an air stream inside the separator device 1; and

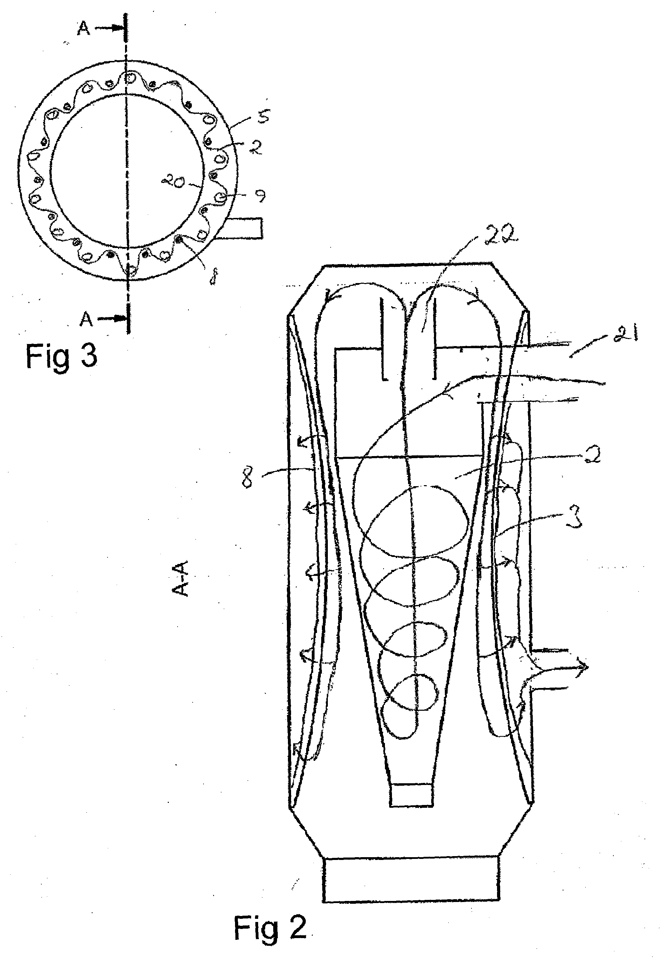

Fig. 3 is a schematic sectional top view of a detail of the separator device shown in Figs 1 a-1 b and 2.

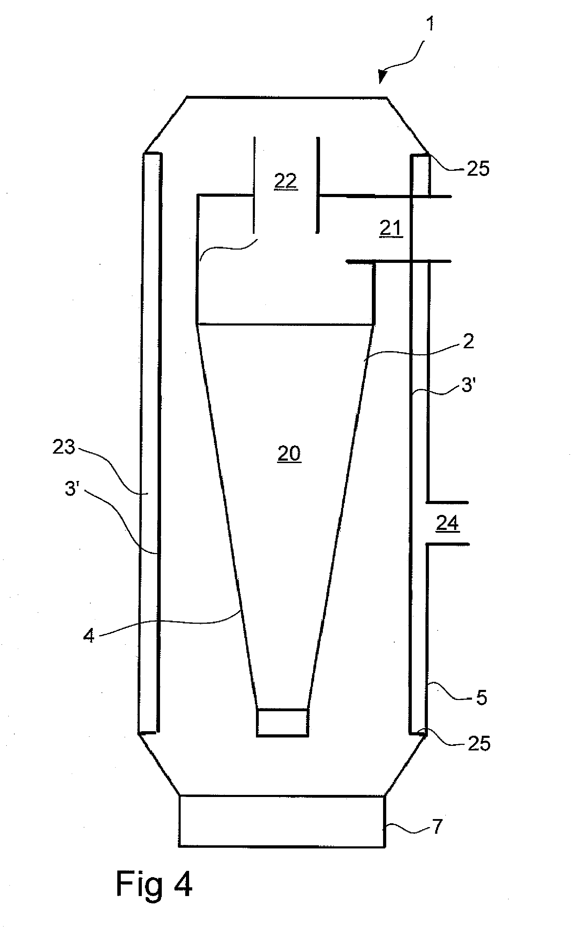

Fig. 4 is a schematic sectional view along line A-A of Fig. 1a, illustrating an alternative embodiment.

### Detailed description of embodiments

Figs 1a-1b show, in a schematic and sectional side view, a separator device 1 according to the present solution.

The separator device 1 comprises a cyclone separator 2 with a casing 20, an air stream inlet 21, and an air stream outlet 22. A filter 3 in the form of a tubular coarse filter is arranged around the cyclone separator 2, such that it surrounds a conical portion 4 of the cyclone separator 2, providing an air stream passage way between the cyclone separator 2 and the filter 3. The cyclone separator 2 and the filter 3 are confined in a common housing 5. A web 8 is arranged outside the filter 3 to provide an air stream passage way 23 between the filter 3 and the housing 5, which air passage way is in connection with a (not shown) micro filter via a channel 24. The clean side of the micro filter is connected to the suction side of a (not shown) vacuum source of conventional type.

Below the cyclone separator 2 there is an output nozzle 7 for separated particles, leading to a (not shown) collecting bag arranged for the collection of particles deposited in the cyclone separator 2 as well as in the filter 2.

The flow of the air stream through the separator device 1 during operation is schematically shown by arrows in Fig 2.

During operation of the separator device 1, the not shown vacuum source brings a particle filled air stream through the inlet 21 and into the cyclone separator 2, where a first separation takes place in a known way. The air stream then flows through the outlet 22 and passes the filter 3 where a second separation takes place. Due to the web 8, the filter 2 is prevented from expanding towards the housing 5, and thus there is an air passage way between the clean side of the filter 3 and the housing 5. Finally, the air stream is passed through the not shown micro filter where a third separation takes place to remove the small particles still present in the air stream before it passes through the vacuum source and is subsequently released into the surrounding air.

Since the filter 3 is arranged to surround the cyclone separator 2, it is possible to provide a large filter area without adding extra height to the separator device 1. Such, the solution provides a compact separator device with good separation properties.

Fig. 3 shows in more detail how a first web 8 may be used to position the filter between the casing 20 and housing 5.

As can be seen in the figures a first web 8, schematically indicated as filled dots, positions the filter 2 relative to the housing 5 such that the filter 2 during operation is prevented from blocking the air passage way for air that has passed through the filter 2. Also schematically shown, in the form of circles, is a second, optional, web 9, which is arranged to press out part of the filter 2 towards the housing 5 relative to the first web 8. This results in a "creased" filter which allows a bigger filter surface, and thus improves the separation, reduces the down time and increases the capacity.

The first 8 and second 9 web may be integrated with each other.

The filter 2 may be fastened to the separator device 1 by a clamp arrangement between two parts of the housing 5, or by any other suitable way known in the art.

A micro filter may be arranged outside the housing, between the housing 5 and the vacuum source.

The solution has mainly been described above with reference to a few embodiments. However, as is readily appreciated by a person skilled in the art, other embodiments than the ones disclosed above are equally possible within the scope of the invention, as defined by the appended patent claims.

Referring to Fig. 4, there is illustrated an alternative embodiment, wherein those parts being the same as in Fig. 1b have the same number.

In the embodiment of Fig. 4, the filter 3' is mounted between a pair of flanges 25, which may be circular and extending along the inner circumference of the housing 5, at upper and lower portions thereof. The filter 3' may be mounted in a tensioned manner, such that the air stream passage way 23 is provided. In this manner, the web 8 or webs 8, 9 may be dispensed with. However, it is possible to combine the flanges 25 with the web 8 or webs 8, 9.

## Claims

1. A separator device (1) for separating particles contained in an air stream, comprising a cyclone separator (2) and a filter (3), said cyclone separator (2) comprising a casing (20) having a substantially conical portion (4), wherein the casing (20) is at least partially surrounded by the filter (3).

2. The separator device (1) as claimed in claim 1, wherein the conical portion (4) is at least partially, possibly entirely, surrounded by the filter (3).

3. The separator device (1) as claimed in any one of the preceding claims, wherein substantially the entire casing (20) is surrounded by the filter (3).

4. The separator device (1) as claimed in any one of the preceding claims, wherein the filter (3) is substantially tube-shaped.

5. The separator device (1) as claimed in any one of the preceding claims, wherein the filter (3) is a coarse filter.

6. The separator device (1) as claimed in any one of the preceding claims, wherein the filter (3) and the cyclone separator (2) are arranged in a common housing (5).

7. The separator device (1),as claimed in claim 5, wherein the filter (3) is arranged between the housing (5) and the casing (20).

8. The separator device (1) as claimed in any one of the preceding claims, so arranged that particles collected by the cyclone separator (2) and particles collected by the filter (3) are deposited in a common collecting bag.

9. The separator device (1) as claimed in any one of the preceding claims, further comprising a first web (8) arranged between the filter (3) and the housing (5) for positioning of the filter (3) relative to the housing (5).

10. The separator device (1) as claimed in claim 9, wherein a second web (9) is arranged to press out part of the filter (3) relative to the first web (8).

11. The separator device as claimed in any one of the preceding claims, wherein at least one flange (25) is provided at an upper and/or lower inner portion of the housing (5), for spacing the filter (3, 3') from a wall of the housing (5).
